Europäisches Patentamt

European Patent Office

Office européen des brevets

(11) Publication number: **0 239 209**
**B1**

# EUROPEAN PATENT SPECIFICATION

(45) Date of publication of patent specification: **09.01.91**

(51) Int. Cl.⁵: **A 63 H 30/04, H 02 H 5/04**

(21) Application number: **87301120.9**

(22) Date of filing: **10.02.87**

(54) A power unit for a battery-driven toy.

(30) Priority: **21.02.86 JP 22913/86**

(43) Date of publication of application:
**30.09.87 Bulletin 87/40**

(45) Publication of the grant of the patent:
**09.01.91 Bulletin 91/02**

(84) Designated Contracting States:
**AT BE CH DE ES FR GB GR IT LI LU NL SE**

(56) References cited:
**US-A-3 846 674**
**US-A-4 143 307**

(73) Proprietor: **NIKKO Co., Ltd.**
**No. 15-15 Kameari 5-chome Katsushika-ku**
**Tokyo (JP)**

(72) Inventor: **Ishimoto, Zenichi**
**c/o Nikko Co., Ltd., No. 5-15-15 Kameari,**
**Katsushika-ku, Tokyo (JP)**

(74) Representative: **Allman, Peter John et al**
**MARKS & CLERK Suite 301 Sunlight House Quay**
**Street**
**Manchester M3 3JY (GB)**

Courier Press, Leamington Spa, England.

## Description

This invention relates to a power unit for a battery-driven toy.

Power units for battery-driven toys are known which comprise a power switch which when turned on makes power available for supply to an electric motor and a variable resistor which controls the magnitude of the current supplied through the power switch to the motor. The variable resistor comprises a resistor and a movable contact which contacts the resistor at a position which may be adjusted by movement of the contact relative to the resistor. The circuit is controlled by a control signal which determines the position of the variable contact relative to the resistor.

If the power switch is left on accidentally, and the control signal is generated so as to cause current to be supplied to the motor through the resistor, the resistor can be overheated, resulting in a fire risk. Furthermore, even if a fire risk does not result, power is consumed in a wasteful manner.

US—A—4,143,307 describes various known power units suitable for use in a motor speed control circuit, but which do not address the above problem.

It is known from US—A—3,846,674 to provide a solid state switch to control the supply of an alternating current to a motor connected in series with the switch. The switch is normally on all the time that the motor is to be energised and is turned off only when overheating of a resistor associated with the motor is detected. The resistor associated with the motor is a passive device however and does not take any part in the variable control of the magnitude of the current supplied to the motor.

It is an object of the present invention to provide a power unit which obviates or mitigates the problem outlined above.

According to the present invention, there is provided a power unit for a battery-driven toy which contains a battery power source for energising a driving motor through a power switch and a variable resistor, the variable resistor comprising a resistor and a movable contact slidable relative to the resistor, the position of the movable contact relative to the resistor controlling the resistance of the variable resistor, characterised in that a temperature sensitive switch is positioned adjacent the resistor so as to sense the temperature of the resistor and to switch if the sensed temperature reaches a predetermined temperature, and a control circuit is operatively connected to the temperature sensitive switch and the movable contact so as to move the movable contact to an off position in response to switching of the temperature sensitive switch.

The servo-mechanism may be provided to control the position of the movable contact relative to the resistor, the servo-mechanism being reset such that the movable contact is moved to the off position in response to switching of the temperature sensitive switch. Alternatively, a relay circuit may be provided which controls the position of the movable contact relative to the resistor, the relay circuit being de-energised in response to switching of the temperaturesensitive switch so as to reset the movable contact to the off position.

The present invention is particularly applicable to battery-driven toys operated by a radio-control system having a wireless receiver.

Preferred embodiments of the invention will now be described with reference to the accompanying drawings, in which:

Figure 1 shows a schematic electrical system for one embodiment of the power unit according to the invention;

Figure 2 shows a schematic electrical system for another embodiment of the power unit according to the invention and;

Figure 3 is a perspective view of a mounting for the thermo-switch as shown in Figs 1 and 2.

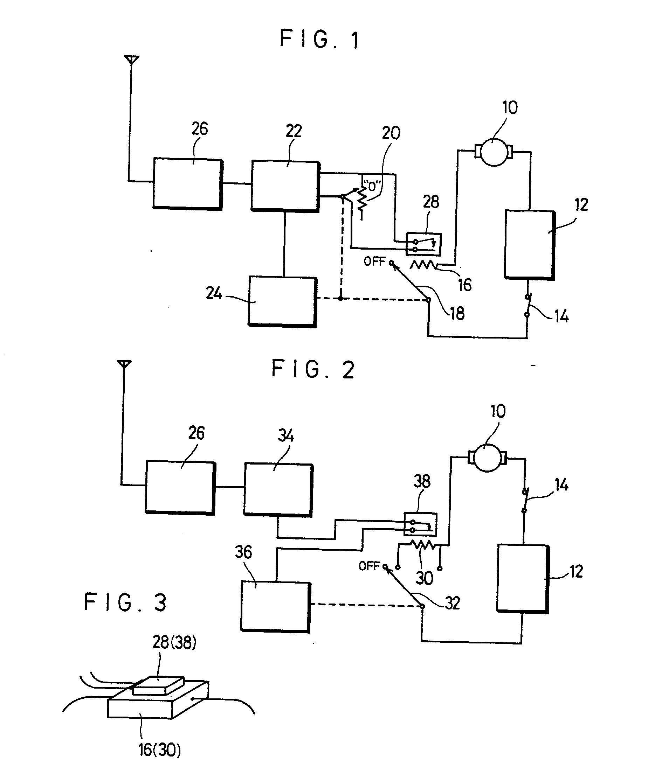

Figure 1 illustrates a schematic electrical, system for a battery-driven toy of a radiocontrollable type designed for controlling a driving electric motor through a servo-mechanism as one embodiment of the power unit according to the invention, in which numerical reference 10 represents a driving motor for the toy provided with a driving circuit comprising a battery 12, a power switch 14, a sliding resistor 16, and a movable contact 18 for controlling the sliding resistor 16 through the servo-mechanism. This servo-mechanism includes a servo-circuit 22 having a potentiometer 20 and a servo-motor 24 and is operated by a required instruction signal through a wireless receiver 26. When the toy thus constructed receives the required instruction signal at its wireless receiver 26, the potentiometer 20 of the servo-circuit 22 may be actuated to operate the servo-motor 24 in response to an instruction value set by the potentiometer 20, thereby to position the movable contact 18 of the sliding resistor 16 (which constitutes the driving circuit of the driving motor 10) to said instruction value for driving the motor 10 depending thereon.

The foregoing construction is identical to conventional common toys of a radio-controllable type. In accordance with the above embodiment of the invention, however, the sliding resistor 16 is provided with a thermo-switch 28 of a normally open contact type, as shown in Fig. 3, which has a terminal connected to the potentiometer 20 of the servo-circuit 22 in such a way that the thermo-switch 28 may be in the ON state upon reaching the predetermined temperature thereby to reset the set value of the potentiometer 20 to zero. With such construction, when the power switch 14 is left in its ON state by accident, the wireless receiver 26 may receive an external electric wave and feed a signal to the servo-circuit 22, thereby to allow the potentiometer 20 to set a certain instruction value for operating the movable contact 18 against the sliding resistor 16 through the servomotor 24. If such abnormal condition is continued, the sliding resistor 16 may generate heat to result in a dangerous condition. When the temperature increases to a certain level in response to the heat generation (for example 150°C), however, the thermo-switch 28 may come to its ON state thereby to reset the potentiometer 20 of the servo-circuit 22 to the zero position. Thus, the servo-motor 24 may operate to immediately reset the movable contact 18 of the sliding resistor 16 to the OFF state and to shut the connection between the sliding resistor 16 and the battery 12.

Figure 2 illustrates another embodiment of the power unit according to the invention, which shows a schematic electrical system for the battery-driven toy of a radiocontrollable type in which a controlling resistor 30 of the driving motor 10 may be controlled by a relay circuit. In accordance with this embodiment, the resistor 30 is provided with a movable contact 32 which may be controlled by a relay coil 36 through a relay-driving circuit 34. Further, the resistor 30 is provided with a thermo-switch 38 of a normally closed contact type, as shown in Fig. 3, which has a terminal arranged between lines of the relay-driving circuit 34 and the relay coil 36. Similarly to the previous embodiment, when the resistor 30 is heated to a dangerous condition, the thermo-switch 38 may come to its OFF state to deenergize the relay coil 36 and thus to immediately reset the movable contact 32 of the resistor 30 to the OFF position, thereby to shut the connection between the resistor 30 and the battery 12.

It will be appreciated from the above embodiments of the battery-driven toy of a radio-controllable type according to the invention in which an external electric wave may be input to operate the controlling circuit of the driving motor, the arrangement of the thermo-switch adjacent the variable resistor is such that, in the event of accidental operation resulting in heat generation the controlling circuit is switched to be OFF state through operation of the thermo-switch, disconnecting the battery from the driving motor, and thereby ensuring prevention of exhaustion of the battery and avoidance of further heat generation in the resistor.

## Claims

1. A power unit for a battery-driven toy which contains a battery power source (12) for energising a driving motor (10) through a power switch (14) and a variable resistor, the variable resistor comprising a resistor (16; 30) and a movable contact (18; 32) slidable relative to the resistor, the position of the movable contact relative to the resistor controlling the resistance of the variable resistor, characterised in that a temperature sensitive switch (28; 38) is positioned adjacent the resistor (16; 30) so as to sense the temperature of the resistor and to switch if the sensed temperature reaches a predetermined temperature, and a control circuit (20, 22, 24; 34, 36) is operatively connected to the temperature sensitive switch and the movable contact so as to move the movable contact to an off position in response to switching of the temperature sensitive switch.

2. A power unit according to claim 1, comprising a servo-mechanism (22, 24) which controls the position of the movable contact relative to the resistor, wherein the control circuit is operative to reset the servo-mechanism such that the movable contact is moved to the off position in response to switching of the temperature sensitive switch.

3. A power unit according to claim 1, comprising a relay circuit (34, 36) which controls the position of the movable contact relative to the resistor, wherein the control circuit is operative to de-energise the relay circuit thereby to reset the movable contact to the off position in response to switching of the temperature sensitive switch.

4. A power unit according to claim 1, wherein the toy is operated by a radiocontrol system having a wireless receiver.

## Patentansprüche

1. Stromversorgungseinheit für ein batteriegetriebenes Spielzeug mit einer Batteriestromquelle (12) zur Erregung eines Antriebsmotors (10) durch einen Leistungsschalter (14) und einen Stellwiderstand, wobei der Stellwiderstand einen Widerstand (16; 30) und einen beweglichen Kontakt (18; 32), der im Verhältnis zum Widerstand gleiten kann, umfaßt, wobei durch die Stellung des beweglichen Kontaktes im Verhältnis zum Widerstand die Widerstandshöhe des Stellwiderstands gesteuert wird, dadurch gekennzeichnet, daß ein temperaturempfindlicher Schalter (28; 38) neben dem Widerstand (16; 30) angeordnet ist, um die Temperatur des Widerstandes zu erfassen und zu schalten, wenn die erfaßte Temperatur eine vorbestimmte Höhe erreicht, und ein Steuerstromkreis (20, 22, 24; 34, 36) mit dem temperaturempfindlichen Schalter und dem beweglichen Kontakt in Betriebsverbindung steht, um den beweglichen Kontakt als Reaktion auf das Schalten des temperaturempfindlichen Schalters in eine Aus-Stellung zu bewegen.

2. Stromversorgungseinheit nach Anspruch 1, umfassend einen Servomechanismus (22, 24) zur Steuerung der Stellung des beweglichen Kontaktes im Verhältnis zum Widerstand, wobei der Steuerstromkreis den Servomechanismus so zurückstellen kann, daß der bewegliche Kontakt als Reaktion auf das Schalten des temperaturempfindlichen Schalters in die Aus-Stellung bewegt wird.

3. Stromversorgungseinheit nach Anspruch 1, umfassend einen Relaisstromkreis (34, 36) zur Steuerung der Stellung des beweglichen Kontakts im Verhältnis zum Widerstand, wobei der Steuerstromkreis den Relaisstromkreis aberregen kann und der bewegliche Kontakt dadurch als Reaktion auf das Schalten des temperaturempfindlichen Schalters in die Aus-Stellung zurückgestellt wird.

4. Stromversorgungseinheit nach Anspruch 1, wobei das Spielzeug durch eine Funk-Fernsteuerung mit einem drahtlosen Empfänger betrieben wird.

**Revendications**

1. Alimentation de puissance pour un jouet à pile, qui contient une source (12) d'énergie de pile pour exciter un moteur d'entraînement (10) à travers un commutateur de puissance (14) et un résisteur variable, le résisteur variable comprenant un résisteur (16; 30) et un contact mobile (18; 32) capable de coulisser par rapport au résisteur, la position du contact mobile par rapport au résisteur commandant le niveau de résistance du résisteur variable, caractérisée en ce qu'un commutateur (28; 38) sensible à la température est mis en position adjacent au résisteur (16; 30) de manière à capter la température du résisteur et à se brancher si la température captée atteint une température déterminée, et un circuit de commande (20, 22, 24; 34, 36) est relié de manière opérative au commutateur sensible à la température et au contact mobile de façon à déplacer le contact mobile vers une position débranchée en réponse au branchement du commutateur sensible à la température.

2. Alimentation de puissance selon la revendication 1, comprenant un servomécanisme (22, 24) qui commande la position du contact mobile par rapport au résisteur, dans laquelle le circuit de commande fonctionne pour remettre le servomécanisme à l'état initial demanière que le contact-mobile se déplace vers la position débranchée en réponse au branchement du commutateur sensible à la température.

3. Alimentation de puissance selon la revendication 1, comprenant un circuit relai (34, 36) qui commande la position du contact mobile par rapport au résisteur, dans laquelle le circuit de commande fonctionne pour désexciter le circuit relai, pour remettre à l'état initial par là même le contact mobile à la position débranchée en réponse au branchement du commutateur sensible à la température.

4. Alimentation de puissance selon la revendication 1, dans laquelle le jouet est actionné par un système de commande radio ayant un récepteur radio.

EP 0 239 209 B1

FIG. 1

FIG. 2

FIG. 3

1